# EUROPEAN PATENT SPECIFICATION

(11) **EP 3 319 704 B1**
(45) Date of publication and mention of the grant of the patent: **11.03.2020**
(21) Application number: 15744712.9
(22) Date of filing: 08.07.2015
(51) Int. Cl.: B01D 17/00

(54) **SEPARATION SYSTEM FOR SIMULTANEOUS REMOVAL OF BOTH SOLID PARTICLES AND LIQUID DROPLETS SUSPENDED IN ANOTHER LIQUID**
ABSCHEIDESYSTEM ZUR GLEICHZEITIGEN ENTFERNUNG VON FESTSTOFFTEILCHEN UND FLÜSSIGKEITSTROPFEN IN EINER ANDEREN FLÜSSIGKEIT
SYSTÈME DE SÉPARATION POUR L'ÉLIMINATION SIMULTANÉE DE PARTICULES SOLIDES ET DE GOUTTELETTES LIQUIDES EN SUSPENSION DANS UN AUTRE LIQUIDE

(43) Date of publication of application: 16.05.2018
(73) Proprietor: Amazon Filters Spólka z Ograniczona Odpowiedzialnoscia, 05-077 Warszawa-Wesola (PL)
(72) Inventor: KRASINSKI, Andrzej, PL-02-685 Warszawa (PL); GRADON, Leon, PL-02-796 Warszawa (PL); BODASINSKI, Jacek, PL-02-840 Warszawa (PL); KMUK, Pawel, PL-05-091 Zabki (PL); GRADON, Jan, PL-02-796 Warszawa (PL)
(86) International application number: PCT/PL2015/050030
(87) International publication number: WO 2017/007348

(56) References cited:
- WO-A1-2011/162854
- WO-A1-2013/079172
- US-A1- 2011 124 941
- US-A1- 2014 110 354

## Description

The invention relates to a separation system for simultaneous removal of solid phase particles and dispersed phase in the form of droplets of a liquid, both of them suspended in a continuous phase which is another liquid, and in particular for removing solid contaminants and water particles dispersed in the fuel, especially in diesel fuel, or solid contaminants and oil droplets dispersed in water.

Growing technological and environmental requirements related to a quality of liquids and gases used in production lines or emitted into environment require an increasing challenge to develop new technical solutions for deep cleaning of fluids on the nanometric level from particles suspended in those fluids.

The condensed form of a matter dispersed in a form of liquid droplets in another liquid, immiscible with it, or in particulate form is an example of multiphase systems for which the need for an effective high efficiency separation is a challenge to recently developed separation systems. This includes among others returning to the environment of a water used in fracturing process during extraction of shale gas, purification of liquid fuels used in energy technology and in motor vehicles, purification of products of chemical synthesis and other uses of a similar nature.

Known solutions intended for separation of suspensions have various structures depending on a size of particles or droplets of a dispersed phase and different physico-chemical properties which characterize two-phase systems, especially with respect to their stability. In case of objects of nanometric size the most effective way to remove them is filtration by nonwoven fabric filters. Such filters have a high-developed surface per volume unit, thus ensuring high capacity for retaining particles deposited on fibres of such a filtration non-woven fabric. In addition, such structures can be freely shaped with respect to requirements of their external geometry and fibrous morphology of such nonwoven fabric material. Internal structure of a filter is designed in a way to allow maximization of efficiency of particles deposition on its fibres and its capacity. This depends on a local porosity of such filter and on a diameter of fibres from which a filter is made.

There is known variety of commercial solutions of such kind of filters intended to remove particles of a solid phase from a liquid or for separation of emulsion, i.e. a slurry containing a continuous phase of one fluid and a dispersed phase of another fluid/liquid.

The problem becomes more difficult when a suspension to be filtered comprises both, solid particles and droplets of another fluid, especially liquid, for example, a system in which a water is a continuous phase and droplets of hydrocarbons, for example oil, and solid particles, for example silica, are dispersed in it or in another case, in which a gaseous medium is a continuous phase, whereas droplets of water and solid particles (e.g. a carbon black or iron oxides) are a dispersed phase. To design suitable separating solution for separation of such systems it is required to use properly of physico-chemical phenomena and effects favourable for simultaneous removal of liquid droplets and solid particles in one and the same device.

Simultaneous presence in a medium to be filtered, in further text referred to "a filtered medium", of droplets of another fluid, i.e. a dispersed phase and solid particles, especially when they are of sub-micron size, causes that a well-designed equipment for removing particulates is not effective when additionally small droplets of a liquid are also present. Droplets deposited on a separation surface and subsequently dripped from it may cause removing the particulates deposited on this surface and impair filtration effect.

When it is intended to remove droplets of liquid and particles of submicron sizes from a continuous phase (a fluid), its flow through a porous filtration structure must be done in a manner facilitating a coalescence with providing for creation of large liquid droplets at an outlet of said structure, and in a second step their precipitation by gravity methods or by other special methods. In this case, there are known in the art e.g. hydrophobic separation means used in de-watering processes of aviation fuel and diesel oil.

In systems known in the art, separation process is carried out in such a way that an emulsion, consisting of a continuous phase and dispersed in it small droplets, flows through a first filter layer serving as a coalescer, in which small droplets are joined together into large ones, and then large droplets entrained in a flow of a continuous phase are stopped by a second separation filter layer which is permeable only for such continuous phase. Large droplets that are retained flow down then into a lower or upper receiver. The second layer should have adequate surface properties i.e. having hydrophobic characteristics in relation to droplets of a dispersed phase.

Known filtration systems of the above described type became ineffective or their lifetime is significantly shortened in the case when additional simultaneous removal from filtered medium of solid particles is needed. Since a coalescing element has such a property that by means of increasing shear stresses in a continuous phase during its flow through narrow channels of a porous coalescing structure an effect of joining of droplets in a flow increases. This in turn reduces a residence time of a fluid in a filter area, which reduced residence time significantly reduces efficiency of deposition of submicron solid particles in a coalescing structure. In addition, solid phase particles deposited directly on fibres of a coalescing structure may cause changes in characteristic surface properties of said fibres and, consequently, a drastic decrease in deposition effectiveness of flowing droplets on such fibres of said porous structure.

Such solutions are, for instance, known from the following patents: US 20110127211 A1 - *Diesel fuel filter,* US 20070084776 A1 (WO2007041559) - *Water separation and filtration structure,* US 4,253,954 A - *Two-stage spin-on separating device* and WO2013079172A1 - *Filter device* and a filter disclosed in WO2011/162854.

US 20110127211 A1 discloses a diesel oil filtration system having cylindrical shape, comprising a first and a second filtration layers, wherein the second filtration layer is arranged concentrically inside the first filtration layer having a larger diameter and developed filtration surface, preferably in the form of a pleated layer. Both filtration layers are arranged in a filter housing and separated from each other by a space in the form of a gap, forming a collection passage being in fluid communication with a collecting chamber, to which water droplets separated from oil are dripped. Said first filtration layer, in which fine water droplets are joined into droplets of larger sizes, comprises a layer of PBT fibres and a cellulose layer, while said second filtration layer, which filters out large water droplets formed in the first layer, comprises glass fibres. The separated water molecules, both large and small droplets, dripping into the collection passage are collected in the collecting chamber below the filtration layers and then removed from there, while purified diesel oil flows through the second filtration layer to an outlet of the filter device. In the above described embodiment there is no any separate pre-filtration structure intended for a separation of solid phase particles, which results in that an entire pollution load of solid particulate contaminants is taken over by the coalescing structure. As a result, surface properties of such structure which are critical for a high efficiency in capturing of droplets from a dispersed phase and joining them together into larger droplets will be uncontrollably altered by the presence of deposited solid particles.

Publication WO2013 079 172 A1 discloses a filtration device with similar to the above-described operating principle and similar structure, intended for filtration liquids, in particular a diesel oil contaminated with water in the form of dispersed fine droplets and with solid contaminants in the form of solid particles. A device is of a cylindrical shape, and has a housing with an inlet and an outlet of a medium to be filtered, and successively arranged within said housing in a direction of flow of a filtered medium from said inlet to said outlet: a layer of filtering material, supported on a porous supporting tube which is permeable for filtered medium, which filtering material is used to separate particles of solid contaminants and at the same time for initial coagulation of dispersed fine water particles, i.e. a dispersed phase, into droplets of larger sizes, a coalescing-filtering layer deposited directly on said filtering material in the form of a spun-spray fibrous layer, i.e. fibres deposited by spraying method. Directly following it is arranged a drainage gap, placed directly behind it in the form of a separating zone and a hydrophobic fabric layer, constituting a water barrier layer. In the drainage gap, water droplets exiting coalescing-filtering fibrous layer along with a flow of said filtered medium and stopped by said barrier layer, fall under influence of gravity forces down and they are collected in a collecting space being in fluid communication with the drainage gap, which collecting space is placed in a lower part of said filtration device, where they are removed from. Purified diesel oil, after passing through a hydrophobic fabric barrier layer flows to the outlet of the filtration device. According to this embodiment said filtering material layer is formed of a known multilayer filtering mat in the form of a pleated layer or a layer corrugated in a star shape, comprising a non-woven or fibrous material or a solid filtering cloth. A spun-spray type coalescing-filtering layer demonstrates more effective coalescing function than commonly used hydrophobic coalescing layers of polyester fibres. According to this patent, a particularly preferred is such a configuration of a filtration device, in which a layer of a filtering material is formed in a shape of a hollow cylinder, and the flow of said filtered medium is realized therein from inside to outside, i.e. the inlet of said device is connected to the inner hollow space of the cylinder defined by a layer of filtering material, on an outer surface of which a spun-spray type fibrous hydrophobic layer is deposited, which in turn adjoins on a side of its outer surface to a drainage gap, defined between this surface and radially-inner surface of said hydrophobic layer of a barrier fabric, a radially-outer surface of which is in a fluid communication with said outlet of the device. Such a configuration allows obtaining advantageous kinetic conditions, namely, a flow rate on the outer side of the filtering element having highly developed surface is much smaller than for a flow in the opposite direction, i.e. from outside to inside. A smaller flow rate causes that liquid droplets leaving the filtering element have low kinetic energy and thus the radial component of a force acting on them is smaller than its vertical component, thanks to which it is easier to separate them one from each other in the drainage gap.
Additionally in such configuration the barrier layer which is located on the outer side of the filter can be made as having a larger surface area with respect to an embodiment with a reversed flow direction of filtered medium.

Publication WO2007041559 discloses in turn a filtering/coalescing structure simultaneously separating a water that is used in fuel filters in vehicles powered by an internal combustion engine, which structure is of similar multilayered configuration as above described known filtration systems, wherein a filtering-coalescing structure is here in a form of a multilayered fibrous gradient structure including a filtration layer and a coalescing layer, which is separated in turn by a drainage gap from following it in a flow direction of a filtered medium, hydrophobic water barrier layer, which is at the same time permeable to a filtered medium. The filtering-coalescing structure is shaped in the form of a cylinder of a pleated side surface. The filtration layer of the filtering-coalescing structure is designed for pre-filtration of solid particles having dimensions in the range of 2-50µm and forms a pleated cellulose structure with an optional addition of a minimum amount of synthetic fibres, resin and other active substances, wherein such a structure has a basis weight in the range of 901bs at 3000ft² (41 kg x 279m²), a thickness in the range of 0.020" to 0.040" (0.05-0.10 cm) and an air permeability in the range of 10-15 CFM/ft²1/2". According to authors, utilization of such cellulose layer allows influencing on changes of an interfacial surface tension of a water/fuel dispersion by means of removing a solid phase from such a dispersion, thereby increasing in a value of an interfacial tension and thereby facilitating joining together of droplets in a deeper located coalescing structure. On this cellulose structure, serving as a substrate, in a direction of said medium flow, the multilayer coalescing structure is formed, which comprises polymer synthetic fibres having hydrophilic properties that are formed by "spun-bond" and/or "melt-blown" method, and which structure being a fibrous layer formed with a gradient, i.e. in which an average diameter and/or density of fibres change through a thickness of the structure, and further wherein fibre diameters alter in a flow direction starting from fibres of a small size and higher packing density (i.e. small pore size) to fibres of larger sizes and a lower packing density (i.e. with larger pores). Diameters of fibres range from sub-micron to larger than 50 µm, while an air permeability of such fibrous coalescing structure is in the range of 84-332 CFM /ft² 1/2" in water and changes gradually in successive layers of the structure in a flow direction. Synthetic fibres used in such coalescing structure are, for example, natural hydrophilic nylon fibres or polyester fibres modified in order to impart them hydrophilic properties or bicomponent fibres having a reinforced core and hydrophilic shell. Fine water particles dispersed in said gradient coalescing structure are separated from filtered medium and they join to each other forming large water droplets, which while leaving last layer of the coalescing structure enter into a radial gap between said filtration/coalescing structure and following it in the flow direction a hydrophobic water barrier layer. Such large droplets drip in this gap under influence of gravity vertically into a collecting container located at a bottom of a housing of the filtering device and being in fluid communication with this gap. The barrier layer comprises naturally hydrophobic fluoropolymeric fibres, for example: Teflon or polypropylene fibres, or other polyolefin fibres, or cellulose fibres modified to give them hydrophobic properties and it forms a fibrous structure having a relatively high average porosity which allows minimizing a flow rate of a fluid in order to effectively separate fine water droplets remaining in a fuel after passing through the filtration-coalescing structure. The above disclosed separation system comprises a pleated filtration-coalescing structure composed of several layers of flat fibrous structures that have relatively low absorbency with regards to impurities in a solid particulate form, which low absorbency is particularly important during efficient filtration of media strongly contaminated with solid particles.

Known filtration systems for purification of medium in a form of liquid continuous phase comprising impurities both in the form of solid particles and liquid particles (droplets) of a dispersed phase, do not provide a sufficient efficiency in capturing of very fine particles of solid impurities having submicron sizes and separating them from a filtered medium. Moreover, a structure of known filtration systems for two-stage filtration does not prevent in a sufficient degree capturing and accumulation of droplets of a dispersed phase in pre-filtration layer, which during operation of a filter can lead to a relatively rapid clogging of such filter, and as a result reduces effective operation life time of known filtration systems of this type.

Therefore it is particularly desirable to improve functioning of known separation systems in a field of filtration of highly polluted liquids with solid particles, as well as in the field of filtering systems for filtered media in which a dispersed liquid forms an emulsion with a high stability, i.e. media in which droplets of a dispersed phase have very small dimensions, and additional interactions between solid particles and such droplets significantly limit their ability to contact each other and coalescence.

### Summary of the invention

Separation system for simultaneous removal of a solid phase particles and a dispersed phase droplets from a medium to be purified by filtration, that is a filtrated medium in a form of a suspension or emulsion, that is a liquid continuous phase comprising particles of a solid phase and a liquid dispersed phase which liquid is dispersed in the form of droplets suspended in an immiscible with them liquid continuous phase, which said continuous phase constitutes a medium to be filtered, wherein the separation system has a form of a multilayer fibrous structure of a self-supported design construction or a construction supported on one or more perforated supporting elements (EN1, EN2), preferably cylindrical, and it is provided with an inlet and an outlet of said medium to be filtered, wherein said separation system comprises, arranged successively in a flow direction of said medium to be filtered from said inlet to said outlet, following layers:
- a filtration-coalescing element in a form of a fibrous structure, responsible for removing of particles of said solid phase and for coalescence of droplets of said dispersed phase,
- a separating element, which is a barrier layer for droplets of said dispersed phase, said element is formed of fibres with phobic properties, especially hydrophobic, relative to droplets of the dispersed phase, which said element is responsible for separation of droplets formed as an effect of coalescence of the dispersed phase from the continuous phase, and
- a drainage gap, disposed there between and separating said elements from each other, which gap being a free space for dripping of droplets of said dispersed phase, under influence of gravity and being in fluid communication with said accumulation space in which dripped droplets of the dispersed phase are collected, which accumulation space is located immediately below the separation system or above the system and it is equipped with a valve, wherein the filtration-coalescing element is a nonwoven fibrous structure composed of at least two layers including at least a filtration structure. Said separation system according to the invention is characteristic in that:
   the filtration-coalescing element is in the form of a depth non-woven structure composed of fibres packed in a form of a cartridge and it comprises, viewing in a flow direction from said inlet of inflowing medium to be filtered towards said outlet and arranged in sequence one following another:
   - a filtration layer being an initial depth filtration layer comprising polymer fibres of nanometric sizes, wherein said fibres composing the layer have extensively phobic properties, and preferably superphobic properties, of their surface relative to droplets of said dispersed phase, defined by contact angles equal to or greater than 120°, and further the filtration layer is a structure having across its thickness a porosity gradient, namely its porosity decreases from an inlet side to an outlet side of the layer in said direction of a flow of said medium to be filtered, which porosity is within limits of an average porosity ranging from 90 to 95%;
   - a coalescing layer composed of polymer fibres and, adjacently following it, is arranged
   - a dripping layer composed of polymer fibres, wherein both latter layers, which jointly form a coalescing structure are packaged in the form of a depth gradient structure of fibres and wherein a porosity gradient across the entire coalescing structure changes in the opposed direction with respect to said porosity gradient in the filtration layer, namely the porosity increases in the flow direction of said medium to be filtered stream, and wherein polymer fibres from which the above listed layers are composed demonstrate variable surface properties defined by variable contact angles with respect to droplets of said dispersed phase along the path of flow of said medium across the structure in the flow direction, in such a way that a porosity in the coalescing layer changes in gradient ranging from 75% to 95% along the dais direction, and said fibres in the coalescing layer exhibit poor philic properties and/or poor phobic properties relative to droplets of the dispersed phase, which properties are defined by contact angles in the range from 45° to 95°, whereas the dripping layer has an average porosity in the range of 85-98%, and contact angles defining surface properties of said fibres in this latter layer are in the range from 75° to 105°, whereby the filtration layer (la) comprises fibres whose diameters are in the range 250-800 nm, and preferably in the range 400-600nm, and having thickness in the range 5-20 mm, the coalescing layer (lb) of said filtration-coalescing element (1) comprises fibres of diameter sizes in the range 0.5-30 µm, preferably 0.8-15 µm and a thickness in the range of 2-6mm, and the dripping layer (lc) of the filtration-coalescing element (1) comprises fibres of diameter sizes in the range of 40-120um, preferably 60-90µπι and a thickness in the range of 4-8mm.

The aim of present invention is to provide a filtration device being a separation system for simultaneous removal of both particles of a solid phase and a dispersed phase in the form of fine liquid droplets from a continuous phase being a medium to be filtered, further referred to as "filtered medium", which system would eliminate or decrease disadvantages of the known filtration devices of the type described above, and in particular, would provide a better purification efficiency of a continuous phase from impurities in comparison to currently known systems while at the same time extending the operation lifetime of a filtration device.

An object of the invention is to obtain a significantly more efficient working and longer operation lifetime of the proposed inventive separation system, in particular in the case of high concentrations in continuous phase to be filtered of impurities in a form of solid particles and in case of emulsion systems with high stability, in which coalescing of dispersed fine droplets is especially difficult and in which droplets penetrating, even in minimal quantities, through a coalescer, reach a surface of a separator and are gradually deposited on it, that results in increasing of a pressure drop across this coalescer element and consequently leads to its "breakthrough", i.e. to push the deposited droplets through the element before they can join together into large droplets being able to fall in a drainage gap on a hydrophobic separation element inlet side.

The object of the invention is to achieve a significant improvement of operation of the separation system according to the present invention in comparison to known separation systems in the field of filtration of liquids highly contaminated with solid particles and for systems in which a dispersed liquid forms an emulsion with high stability, i.e. in which droplets of a dispersed phase are very fine in sizes, and additional interactions between solid particles and droplets significantly restrict their mutual contact and their coalescence.

By means of the separation system according to the invention the following problems occurring in the prior art are solved, namely:
- it provides a possibility of selectively retaining particles of a solid phase including those of nanometric size, while minimizing or eliminating deposition of droplets of a dispersed phase on fibres of a filtration structure;
- it provides not only protection of coalescing layer located deeper across a filter structure, i.e. following a deep filtration layer, but also simultaneous pre-coalescence, and first of all a selective action of a filtration layer is also achieved;
- thanks to its gradient configuration, the coalescing structure suitably designed according to the invention provides much lower values of a flow resistance than strongly hydrophilic structures recommended in prior art systems and known studies;
- a high efficiency of a coalescence is obtained thanks to internal geometry of a porous structure with a high value of a specific surface area;
- it provides further a long effective working time of a second stage of such filter, that is a barrier layer, especially when a filtered medium are stable emulsion systems, for example, such as: aqueous emulsions in low sulphur diesel oil or emulsions comprising bio-component additives.

In comparison to those currently existing filtration systems, described in the introductory part of this description, significant improvement in operation of the proposed separation system according to the invention is achieved by particularly developed structure of a selective depth filtration layer, further in the present description referred to as "a filtration layer" of a filtration-coalescing element. Due to using nano-fibres in said filtration layer, a very large internal specific surface area of this layer is obtained, which makes it guarantee successful capturing of particles of a solid phase of both very fine submicron size and even larger sizes. Selective operation of said filtration layer has been achieved due to high phobicity, e.g. hydrophobicity, especially superphobicity (i.e. superphobic properties), e.g. superphobicity of fibres contained therein, which high phobic properties provide minimizing an effect of capturing and accumulating of droplets of a dispersed phase, for example water droplets, within said layer. Thanks to that said filtration layer is not clogged with solid and liquid components, through which otherwise a flowing filtered medium, for example fuel, would have to penetrate.

Such working conditions make a pressure drop by a filtered medium flow in this layer kept at a fairly low level, and an operation lifetime of this filtration layer and the entire filtration-coalescing element significantly increases.

Extension of a working lifetime of a pre-filtering structure, i.e. the filtration layer, is also directly related to the fact that it is manufactured as a deep structure having significantly greater thickness and a volume and thus a capacity for solid particles in comparison to commonly used in technique thin filtration layers in the form of a pleated layer, i.e. pleated filters. Due to gradient characteristic of internal structure of such filtration layer according to the present invention, which results from continuously and gradually changing a porosity and/or diameters of fibres contained therein along a flow path of a purified medium across the layer, solid particles may be deposited in its whole volume, depending on their size. At the same time, during flow of a medium to be filtered, further referred as "filtered medium", through the filtration layer an initial coalescence of fine droplets occurs.

According to the invention, after an initial coalescence, which is substantially realized as a result of high shear stresses in the filtration layer of the filtration-coalescing element, an inertia effect depended on a speed and sizes of droplets can be controlled by proper designing of a deep non-woven structure which design is defined by local values of a porosity and a diameter of fibres.

The structure of the coalescing layer according to the invention, which is non-pleated, has much lower outer surface, which may affect on increasing of a flow resistance in comparison to a developed pleated surface, but in the presented invention the structure of the coalescing layer is characterized by a low wettability and its saturation, for example, with a water during de-watering of a diesel oil. Said phenomena compensate this effect and make it possible to obtain in said layer low-pressure drop. By means of proper selection of surface properties and structural parameters of said layers of the system it is obtained a pressure drop on a comparable or even lower level than in currently used and known highly hydrophilic structures.

It is commonly believed that for obtaining a high separation efficiency of a fibrous filtering structure a philic properties of fibre surfaces with respect to a liquid of a dispersed phase (i.e. droplets), for example hydrophilic properties when a water is said dispersed phase, are advantageous, however, according to the invention by appropriate design of a structure comprising nanofibres with poor phobicity e.g. hydrophobicity or poor philicity e.g. hydrophilicity, very high separation efficiency is achieved, while in stable operating conditions of the filter system, retention of droplets of a dispersed phase, for example water, within the coalescing layer (so called, saturation) is small, so that pressure drops are low. Therefore the structure is not blocked by water due to small adhesion forces of water with respect to fibres with slightly hydrophilic characteristics.

It should be emphasized that known filtration structures protecting a coalescence layer, discussed in the prior art cited above, retain solid particles at their surfaces. Therefore, such structures are most often pleated to increase their surface area and absorbency.

In contrast, in the embodiment of the invention an outer surface of the filtration layer is not developed in a pleated or otherwise corrugated form, but in fact effective filtration surface area of said layer is many times larger in comparison to known pleated surfaces. Selectivity of filtration layers in known filtration system is provided by pore sizes, whereas according to the present invention it is provided by a more subtle mechanisms resulting from surface properties of fibres used in the entire depth-in structure, that have been identified according to the invention to provide selective retention of solid particles while simultaneously letting the fine droplets passing through.

Such specific properties according to the invention of the filtration-coalescing element significantly improve both the lifetime of the whole separation system, as well as its effectiveness with respect to the known solutions.

Another advantage of the presented two-step filtration system according to the invention relies on higher speed of a filtered medium at the outlet side of a dripping layer of the filtration-coalescing layer. It results from a low surface area of this layer in comparison to prior art pleated system and higher linear speed occurring directly in pores of the dripping layer structure.

On the one hand, said structure of this layer limits possibility of creating the largest possible droplets, however, as was demonstrated by other studies for 1-stage coalescing elements, droplets formed in such structure are still sufficiently large (approximately having several millimetre diameter) to be effectively sedimented. In the case of smaller droplets as a result of correspondingly high speed, which is still accelerating in the radial direction towards a centre of the filter element, an effect of droplets impacting on the inlet facing side surface of the separating layer enhances purification of this surface from droplets accumulated thereon, causing at an impact time coalescence of droplets or their separation from the structure and their sedimentation in a drainage gap, thus causing a self-cleaning effect of the inlet-side surface of the separating layer.

Additional constructional feature that enhances self-cleaning of the inlet side surface of the hydrophobic separation element according to the invention is proper directional orientation of a flow, that is achieved by providing of flow guiding vanes in the drainage gap space between the filtration-coalescing element and the separation element, which said filtration-coalescing element comprising said filtration layer. Said vanes direct a filtered medium flow tangentially to the surface which is defined by a contour of the outer ridges of pleats of pleated structure of the separation element, causing detaching and breaking off droplets of a dispersed phase from said separation element surface, for example water droplets, under influence of shear stresses and at the same time said droplets are allowed for their further coalescence and consequently effective falling downwards in the drainage gap into the collecting tank.

### Description of figures of drawings

The separation system according to the invention in its preferred embodiments is shown in the drawings, in which:
fig. 1 presents schematic longitudinal section of the separation system according to a first embodiment of the invention,
fig. 2 - schematic cross section of the separation system according to a second embodiment of the invention with spaced swirling guide vanes,
fig. 3 - schematic cross section of the separation system according to the third embodiment of the invention without swirling guide vanes.

### Description of embodiments of the invention

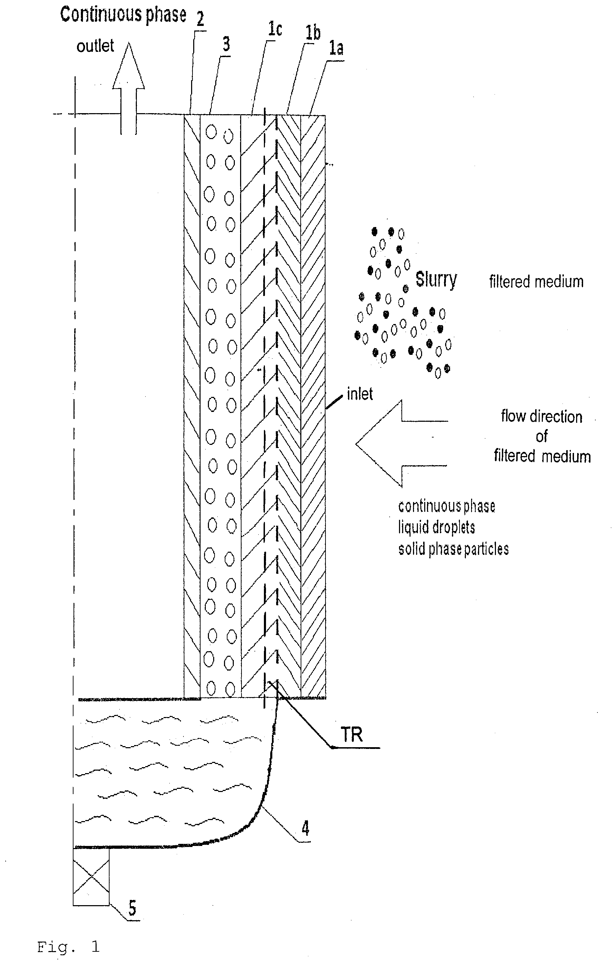

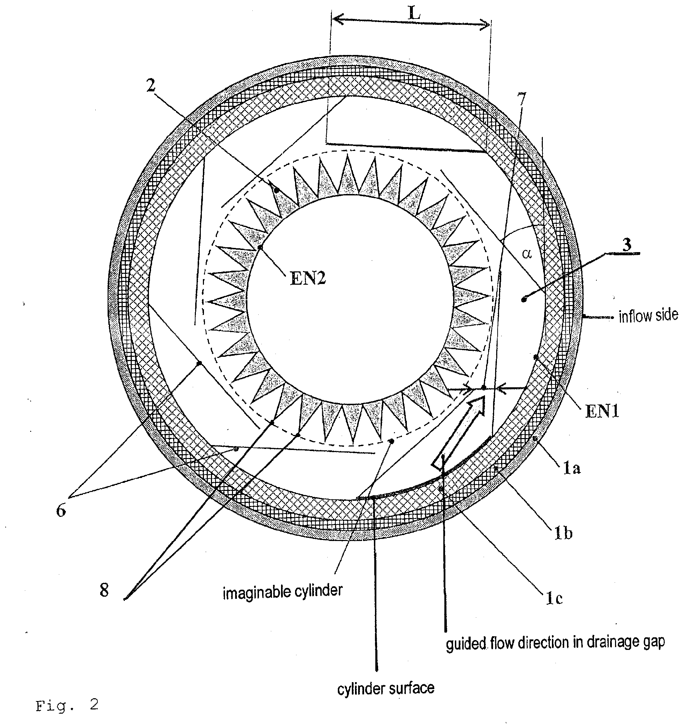

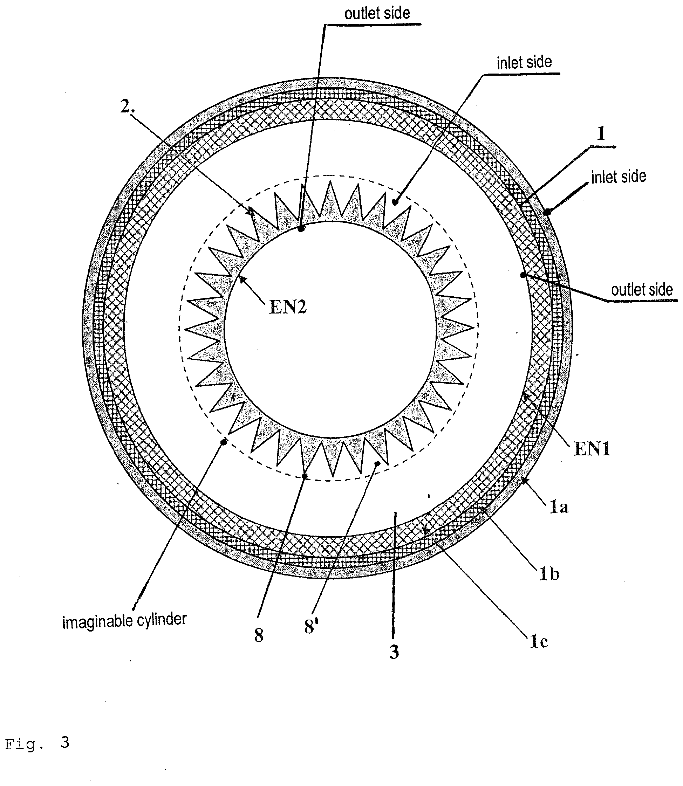

The proposed separation system according to the invention for simultaneous removal of both solid phase particles and dispersed phase in the form of fine droplets of a liquid from a continuous phase being a filtered medium is characteristic by that it comprises in series connected sequence of two filtration elements: first element 1 and a second element 2 (see fig. 1), both having a multilayer structure, wherein the first element **1** as seen from the side of an inflowing medium to be filtered, further referred to also as "filtered medium", is a filtration-coalescing member or element 1, which comprises non-woven fibrous layers **1a, 1b** and **1c,** which layers together form a deep filtration structure comprising fibres with different surface properties and structural characteristics, such as fibres morphology and their packing densities, which structure serving as a filtration-coalescing member 1. The second element 2 is a separation element **2** responsible for separation of droplets of a dispersed phase and a continuous phase, in particular liquid droplets which sizes increase during flow through the filtration-coalescing member 1, particularly in its part forming a coalescer 1b, 1c from filtered medium. Both said elements 1 and 2 are separated by a drainage gap 3, and both are preferably cylindrically shaped and coaxially disposed with respect to each other i.e. one inside the other. In one embodiment of the invention they are arranged on a supporting core which forms a support element **EN1, EN2** having a circular cross-section, and they are separated by an annular space **3,** allowing a free falling of droplets of the dispersed phase, and forming a drainage gap **3,** wherein in the embodiment shown in fig. 1 the filtration-coalescing element 1 in the form of a deep layer is arranged outside with respect to the separation element **2,** on the inlet side of the inflowing medium to be filtered, preferably liquid medium. In contrast, the separation element 2 is made of fibres having hydrophobic properties and it has the form of a pleated layer. The separation element 2 can be supported on a second supporting element EN2 forming a support perforated core, preferably having cylindrical shape and located preferably coaxially on an inner side of the separation element 2 as shown in fig.2 and 3.

It is possible a reverse configuration, that means coaxial location of the filtration-coalescing element 1 inside the outer separation element 2, wherein a flow direction is then also reversed from the inside to the outside. In such of configuration, the order of the layers 1a, 1b and 1c in the filtration-coalescing element 1 according to the flow direction would be also reversed from the inside to the outside, and thus the hydrophobic surface of the separation element 2 would be located on the side of the out flowing liquid (i.e. from outer side of the system). This arrangement seems to be less favourable from point of view of reducing filtration surface of the element 1 and thus undesirable reduction of throughput of the entire system.
According to the fig. 1, directly below the separation system, in flow communication with the drainage gap 3, an accumulation space 4 with a draining valve 5 is disposed, however, it is possible to arrange the accumulation space 4 above the separation system and the drainage gap 3, in particular for the case where a liquid of a continuous phase has a higher density and a mass density than the liquid of a dispersed phase. In the embodiment shown in fig. 1 the separation system adapted especially for filtration of such a filtered medium is presented, wherein the liquid of the continuous phase has a lower density than the liquid of the dispersed phase, for example in case of purification of fuel (continuous phase) from the water droplets suspended therein (dispersed phase).

The element **1** in the form of the filtration-coalescing member 1 is a deep non-woven structure made of fibres packed in a form of a cartridge in which local porosity values and fibre diameters alter across the structure in the direction of a flow of a filtered medium, having in particular a slurry form.

Within the filtration-coalescing element 1 or member the following layers can be distinguished, namely: the filtration layer **1a** and following it the layers forming components of the filtration-coalescing structure as a whole, namely: the coalescing layer **1b,** which the coalescing layer is responsible for capturing of all droplets of a dispersed phase, and the dripping layer **1c** in the form of a dripping structure that allows increasing of droplet sizes to large droplets and disconnection of such large droplets of a dispersed phase from fibre surfaces, which droplets having similar sizes or closely to similar or equal sizes i.e. which have a narrow size distribution. The contribution of the individual layers in a total thickness of the structure of the filtration-coalescing element 1 is as follows:
- 20-70%, and preferably 30-50%, of the thickness of the entire structure of the filtration-coalescing element 1 occupies the filtration layer 1a, also referred to as pre-filtration layer or a depth filtration layer;
- 30-80%, preferably 50-70%, of the thickness of the entire structure of the filtration-coalescing element 1 is a structure designed for separation of a dispersed liquid phase, which form the coalescing layer 1b and the dripping layer 1c together;
wherein the thickness of the coalescing layer 1b may comprise 15-50%, preferably 20-45%, of the thickness of the entire coalescing structure 1b and 1c jointly.

The filtration-coalescing element **1** has a multilayer gradient structure, wherein the first layer at its inlet side i.e. the side facing the inlet, that is the upstream filtration layer **1a** of the element **1,** viewing from the side of inflowing medium to be filtered in the direction towards the outlet, is a non-woven fabric having a medium porosity, in the range 90-95%, more preferably 92 -93% comprising nanometric sized fibres, i.e. nanofibres, namely having fibre diameters in the range of 250nm-800nm, and in particular of 400-600 nm and a thickness in the range 5-20mm and in particular 10-15mm, wherein surfaces of said fibres are modified in such a way that they have highly phobic surface properties in relation to the liquid which is the dispersed phase, i.e. forming droplets, and in particular super-phobic surface properties, for example super-hydrophobic properties when the dispersed phase is composed of water droplets. In that first filtration layer **1a** the submicron solid particles are retained with a great effectiveness while the particles of the dispersed phase, particularly liquid droplets, and for example water droplets, pass through.

Such respective modification of the filtration layer 1a located at the inlet-facing side of the element 1, which allows to achieve an effect of selective retention of particles of the solid phase while minimizing or totally eliminating deposition of droplets of the dispersed phase on the fibres is novel. This is achieved through giving super-phobic, for example superhydrophobic, properties to the fibres of which the filtration layer **1a** of the element **1** is composed, which superphobic surface properties can be obtained in known manner by changing chemical composition of a substance of which fibres are composed and produced by melt-blowing fibre formation technique, i.e. of composition which the fibres are produced of. This change can be achieved by adding e.g. among others compounds containing in their structure chlorine and fluorine, such as, for example, perfluoroethers, chloro- and fluorocarbons copolymers, polydimethylsiloxane, to the polymer from which the fibres are formed. The above-mentioned compounds are most often added to the main polymer granulate as an admixture, then they are melted, mixed to form a mixture, and then of such a mixture said fibres are produced (by melt-blowing technique). However, in the case of polydimethylsiloxane it is also possible to coat surface of polymer fibres by dip-coating technique, for example, from a solution of a suitable concentration of PDMS in hexane.

The superphobic properties of the fibres can also or additionally be obtained by simultaneously forming the greater roughness (i.e. the coarseness of fibre surfaces) on the surfaces of fibres composing the structure of the filtration layer **1a.** In the case of polypropylene and polyester fibres, which are commonly used for production of filtration layers and filters of this kind and may be used alternatively, it was developed in the above mentioned purpose an effective method of coating a surface of fibres with silica nanoparticles and/or production of microroughness on a surface of said fibres in a fibre formation process in the high intensity electric field causing micro-cracks on the fibre surfaces. These methods are well known in the art and therefore they will not be discussed in more detail here.

Therefore, novelty of the solution according to the invention lies in using of the first filtration layer **1a** of the filtration-coalescing element **1,** which is the pre-filtering layer of depth filtration and whose function is not only an initial retention of the solid phase particles, including those of nanometric sizes, that means prefiltration, that means not only protection of the coalescing layer **1b** located deeper in the direction of a flow of the continuous filtered phase and simultaneously initial coalescence i.e. pre-coalescence, but especially its selective action in relation to dispersed elements, suspended in the flowing continuous phase, i.e. the dispersed phase, consisting of solid phase particles and liquid droplets of the dispersed second liquid phase, and more specifically its function of capturing and retention of solid particles by simultaneous absence of accumulation of droplets of the dispersed phase in a volume area of the said filtration layer **1a.**

In the filtration layer **1a,** which is the first layer an initial coalescence can occur with the participation and involvement of fibres, but dominant mechanism of influencing an initial coalescence in this layer is different than in known coalescing layers, as well as in the duly coalescing layer **1b** according to the invention, namely the initial coalescence in the first layer **1a,** i.e. in the filtration layer **1a** of the filtration-coalescing member **1** is due to collisions and joining together of fine droplets, which collisions occur in the high shear stress area in this layer **1a,** composed of nanometric size fibres, in particular composed of nanofibres.

Thus, the fibres in this filtration layer **1a** fulfil, apart from the initial filtration, a role of components for ordering the medium flow in a porous structure and affecting on the local hydrodynamic conditions, however, deposition of droplets and, the resulting from this, saturation of the layer 1a structure with a liquid of the dispersed phase retained on the fibres, which is generally considered as a beneficial effect to the coalescence of droplets in the layer **1a** is a negligible effect here. An initial coalescence of droplets of the dispersed phase of the filtered medium in the form of an emulsion is going on during the flow through the filtration layer **1a,** however, it occurs without influencing participation of the fibres and occurs in small pores between the fibres, in which the local shear stress values are significantly high, which promotes collisions between droplets and their joining (known in the art literature as the *shear-induced coalescence or gradient coagulation).*

In the filtration layer **1a** a gradient of porosity occurs - namely, the porosity changes across the structure, and particularly the structure porosity decreases in the direction of a flow of the filtered medium, which is mainly due to an increase in local surface mass of the filtration non-woven fabric of the downstream deeper layers. In addition, it can be accompanied by decrease of fibre diameters in the range of 250-800nm (shown previously) across the structure along the filtered fluid path in the direction of flow, whereas the porosity can simultaneously vary in the range of 90% to 95% - i.e. said porosity descending in the flow direction from higher to lower values.

Downstream the first filtration layer **1a** of the filtration-coalescing element **1** the layers **1b** and **1c** are arranged in sequence, which are respectively the coalescing layer **1b** and the dripping layer **1c,** and which are jointly referred to as a coalescing structure **1b, c,** in which coalescence of the droplets of the dispersed phase, for example water or other liquid droplets, is proceeded. The coalescing layer **1b** is made of fibres with a diameters in the range 0,5µm-30µm, and especially 0,8µm-15µm, having a thickness in the range 2mm-6mm, and more preferably 2mm-4mm. The dripping layer **1c** is made of fibres with diameters in the range 40µm-120µm, and especially 60µm-90µm, having a thickness in the range 4mm-8mm, and more preferably 4mm-6mm.

In contrast to existing known filtration systems described in the above cited patents, the coalescing **1b** and dripping **1c** layers which jointly form so called coalescing structure **1b,c** are the fibrous layers containing "meltblown" fibres and they both have a multilayer structure, wherein, as seen in the direction of the flow i.e. downstream direction, the initial fibres of the coalescing layer **1b** are characterized in that they have poor philic surface properties and/or poor phobicity in relation to the dispersed phase liquid (i.e. droplets), which characteristic surface properties are determined by wetting angles i.e. angles of contact in the range from 45° to 105° wherein those values are related to the so-called static wetting angles values, measured on a surface of flat materials (not on a non-woven fabric).

In both cases, the appropriately designed coalescing structure according to the invention provides significantly lower values of a flow resistance than the highly hydrophilic structures recommended in the known developments of coalescing structures. High effectiveness of the system according to the invention is obtained due to an internal geometry of the porous structure with a high value of the specific surface area.

The entire coalescing structure - including the coalescing layer **1b** and the dripping layer **1c** - is characterized in that the gradient of porosity changes in it, seen in the direction of flow of the filtered medium from the inlet to the outlet, in opposition to the gradient of porosity in the filtration layer **1a,** that is in the depth filtration layer. Namely, the porosity in the coalescing layer **1b** is in the range 70-95% and changes gradually with a gradient within the limit boundary values from 70% to 95% downstream in the flow direction across the layer thickness, while in the dripping layer **1c** the value of an average porosity is in the range of 85-98%.

Wherein the meltblown technology in the apparatus configuration used for the production of this kind filtration layers, that is filters, in particular in the case of the embodiment of the structure of the separation system according to the invention enables a smooth and continuous change of the porosity between the boundary values for the coalescing layer **1b** and for the dripping layer **1c** on a distance of 1-3mm forming a transition area **TR** having a thickness in the range of 1-3 mm, arranged in a contact area of layers **1b** and **1c.** In addition, during forming the fibrous structure of the present invention, a twin-screw extrusion technology with the side screw is used, which allows admixture of a polymer with suitable modifying additives during the manufacturing process of extrusion of fibres.

The suitable modifying additives, which contain, for example chloro- and fluoropolymers, the metering of which to the extruded polymer forming fibres during extrusion cycle, which polymers are blown in the form of fibres, can be switched on or off during the manufacturing cycle, with suitably controlled metering rate, allowing changing the surface properties of such manufactured fibres.

It is also possible metering of nano-particles containing re-granulates that during blowing of a polymer are exposed on the fibre surface, which also results in a change of droplet-fibre interactions, and thus it changes phobicity/philicity of the surface of fibres.

From the point of view of effectiveness of coalescence process it is recommended to choose such type of polymers or such additives used, so that contact angles of fibres forming the coalescing layer **1b** are in the range of 45-95°, while contact angles of fibres forming the dripping layer **1c** are in the range of 75-105°. The dripping layer **1c** located at the outlet side of the filtration-coalescing element **1** i.e. downstream, guarantees dropping down of the majority of droplets of the dispersed phase to a volume **4** accumulating the dispersed phase, located directly below or above the annular drainage gap **3,** separating the elements **1** and the element **2** one another.

Small size of the drainage gap **3,** being in the range 2-10mm, preferably 3-6mm, and particularly preferably 4-5 mm, allows, however, large droplets, separated as a result of a coalescence, having an initial velocity at an outlet side of the dripping layer **1c** large enough to make their trajectory resulting from superposition of the speed of falling of dropping down (caused by gravity in the drainage gap) and the above mentioned speed of the movement of the medium in the flow direction, i.e. towards the hydrophobic surface of the separation element **2** to allow them to impact on the surface of the separation element **2,** on which surface fine, poorly dropping down droplets are collected.

Novelty of the solution according to the invention lies therefore in supporting cleaning of the surface of the hydrophobic separation element **2** facing the drainage gap 3 from droplets of the removed dispersed phase retained on it by means of providing favourable hydrodynamic conditions in the drainage gap **3.** Hydrodynamic conditions of the flow in the drainage gap 3 have therefore essential significance for a long time of effective working of the second stage of the filter, that is the separation element **2,** in particular under conditions where the filtered medium are stable emulsion systems, for example, such as, aqueous emulsions in low sulphur diesel oil or containing biocomponent additives, particularly when fine droplets which don't undergo coalescing are gathered on the surface of the element **2** side facing the gap 3, so that in such a case their excessive over-accumulation leads to increase in the flow resistance and to so called "filter breakthrough", previously discussed.

In the above case the most important is a design of the coalescing structure, and in particular of the dripping layer **1c,** which is made by means of melt-blown technique and which is a depth structure that is not pleated, i.e. does not have any pleats, similarly to the filtration layer **1a** and coalescing layer **1b,** which are also not pleated but they are produced as depth structures. In such system the droplets separated from the internal layer of the filtration-coalescing element, that is from outlet surface of the dripping layer **1c** i.e. its surface facing the gap **3,** are more efficiently accelerated in the direction toward the inlet surface of the separation element **2** i.e. its surface facing the gap 3, due to much higher values of a local linear flow velocity within the pores of the dripping layer **1c,** that layer discharges and disposes a liquid of the continuous phase and large droplets of the dispersed phase on the outside of the filtration-coalescing element **1** into the drainage gap **3.** Thus the separation element **2** is purified by droplets hitting under miscellaneous angles its separation surface that is its inlet side surface, i.e. by droplets hitting under different angles depending on their sizes which droplets are separated from the flowing filtered continuous phase. As a result of collisions of said droplets of the dispersed phase with a hydrophobic surface of the separation element **2** on which small, poorly falling droplets, are deposited it can come to a coalescence of such small droplets and formation of larger, easily falling and dripping down droplets or to tearing off the droplets retained on the separation element **2.** After such separation said droplets may be again deposited on the separation element 2 surface, but in a place located closer to the accumulation volume zone **4** for collecting the dispersed phase. Multiple repetitions of the above described collisions process during filtration process will result in bringing about the droplets into the accumulation volume **4,** from which it is possible to drain such liquid from the bottom part of the filter housing through the draining valve **5.**

Although satisfactory results were achieved for the above described design of the separation system of the invention in the form of a 2-stage filter, further improvement of the 2-stage filter operation was directed toward the effective prevention of settling of droplets, particularly fine droplets, and ensuring efficient removal of droplets of the dispersed phase deposited on a separation element **2** by supporting the system operation with appropriate filtered medium flow hydrodynamics.

To achieve this purpose, it is proposed to use in further one of embodiment of the invention additional constructional components in the form of plurality of guiding vanes **6** arranged in the predetermined volume of the drainage gap **3,** located between the filtration-coalescing element **1** and the separating element **2** (see fig.2), which additional elements would be responsible for division of the dispersion stream flow from the determined outlet surface of the dripping layer **1c** of the filtration-coalescing element **1** i.e. its surface facing the gap 3, and for directing such stream into a properly constructed drainage gap **3.** The said guiding vanes **6,** each having a length **L,** are arranged in spaces one from another around a circumference of the outlet side surface of the dripping layer **1c,** facing the drainage gap 3 and extend from said surface under an angle **α** into the drainage gap **3,** wherein preferably said guiding vanes **6** extend along a whole height of said filtration-coalescing element **1,** that means a height extension of said guiding vanes **6** is preferably equal or smaller than the height of said filtration-coalescing element **1.** Between adjacently located guiding vanes **6** gaps **7** are formed, that can be particularly defined between free end of one guiding vane **6** and a surface of the adjacent vane **6** (as shown in fig.2). Small cross sectional area of the vanes gaps **7** formed between adjacent guiding vanes **6** with respect to the outer surface of the dripping layer **1c,** i.e. the outlet layer of the element **1,** from which a liquid is supplied to the drainage gap **3,** ensures a significant increase in an average linear flow velocity in this location to a value in the range of 5-25mm/s in their i.e. the vanes gaps **7** narrowest places or areas.

Proper orientation of the filtered medium flow in the drainage gap **3,** namely tangentially to a surface of an imaginable cylinder defined by outer ridges **8** of pleats of the pleated separation element **2,** causes creation of a centrifugal force, an influence of which on water droplets, being the dispersed phase, which droplets having a higher density than a diesel oil constituting the continuous phase, limits possibility of penetration of such droplets into gaps formed between the pleat ridges 8 of the separation element **2** and also limits possibility of reaching by such droplets the hydrophobic surface of the separation element **2** at that locations.

In addition, the flow velocity component directed tangentially to a periphery of the separation element **2,** that is designed as a pleated layer provided with circumferentially spaced pleats with pleat ridges **8** and gaps **8'** formed by recesses between adjacent ridges **8** of the pleats, which periphery is defined by external ridges **8** of the pleats of pleated structure of the separation element **2** supports removing of droplets of the dispersed phase that are deposited in a short distance from the ridges **8** of the pleats, as a result of shear stress acting on the droplets. The number of swirling guiding elements i.e. guiding vanes **6** on the periphery circumference can vary in the range 8-32 and a width of a gap **7** formed between the adjacent guiding vanes **6** is in the range 1-4mm.

Especially important for the operational effectiveness of the guiding vanes **6,** supporting the dripping of droplets of the dispersed phase into the accumulation volume **4** is a geometry of these guiding vanes **6** swirling the medium flow, because said geometry determines generation of additional effect allowing to effectively reduce of a number of droplets reaching the surface of the separation element **2** and thanks to appropriate hydrodynamics to support cleansing of the surface of the hydrophobic separation element **2.** A number of swirling guiding vanes **6,** their dimensions and an angle of their inclination with respect to the outer surface of the dripping layer **1c** of the filtration-coalescing element 1 i.e. its surface facing the gap 3 depend not only on the hydrodynamic effect which can be obtained, but they also depend on the geometry of the drainage gap **3.** It is preferred that a length of the guiding vanes **6** is in the range of 10-45mm, and the angle **α** of their inclination (Fig. 2) with respect to a tangent to a circle defined by the inner supporting core EN1 of the filtration-coalescing element **1,** or alternatively defined by cylinder surface of outlet side of dripping layer 1c is in the range of 10°-45° preferably 15°-45°, particularly preferably 25°-40°, especially about 30° +/3°.

The swirling guiding vanes 6 can be disposed at an angle **(a)** relative to the dripping layer 1c on its outflow side, that means its side facing the drainage gap 3, of which droplets of the dispersed phase flow out of said dripping layer **1c,** the angle (**α**) preferably is set in a range of 15°-45° relative to a tangent to the side surface of a cylinder defined by the outer surface of the dripping layer 1c on its outlet side, i.e. its surface facing the drainage gap **3.** The supporting core element EN1 that forms the inner core of the filtration-coalescing element **1** can be a separate constructional element of the system to which element EN1 the swirling guiding vanes 6 are mounted. Alternatively, in another embodiment of the system the supporting element EN1 may be omitted, and the structure of the filtration-coalescing element 1 is then "self-supporting" and no separate constructional support is required. The use of swirling guiding vanes 6 is still possible in such embodiment but they are mounted on an additional constructional element, that is provided and forming the guiding vanes 6 own supporting structure (not shown), with which they form jointly a separate complete constructional element. This constructional element is designed to be arranged in the drainage gap 3, and can provide additional support for the structure of filtration-coalescing element 1 after insertion of such complete element into the drainage gap **3.**

The second element of the separation system, as mentioned above, that is a separation element **2** has a form of a partition **2** made of a material having phobic surface properties relative to droplets of the dispersed phase, which layer constituting a separating element **2** in the form of a partition is made of a surface-modified cellulose fibres or of glass fibres having average pore diameter preferably in the range 0.5-25µm, preferably 0.5-10µm, wherein a thickness of the layer of said separation element **2** is preferably in the range of 0.5-2mm, especially 0.5-1.5mm. The separation element **2** is formed as a pleated one, while the medium flow guiding elements arranged in the drainage gap **3** in the form of the swirling guiding vanes **6** guide the flow of the main stream of a purified liquid i.e. the continuous phase in the gap **3** tangentially to a surface of an imaginable cylinder determined by the ridges **8** of the pleats of the pleated separation element **2** structure.

The separation system according to the invention that is two-stage system in the form of a serial sequence of the following elements: filtration-coalescing element **1** - drainage gap **3** - separating element **2** is characterized especially in that a linear velocity of a slurry to be purified (i.e. the filtered medium) flowing through the structure of the separation element **2** is preferably in the range 5-50 times and in particular 10-40 times smaller than a linear velocity of the slurry exiting the filtration-coalescing element **1.** This is achieved by means of developing of the geometric outer surface of the separation element **2,** that is preferably in the range 5-50 times and in particular 10-40 times greater in relation to the outer surface of the filtration-coalescing element **1** facing the gap 3. Such developing is achieved usually by shaping it in the form of a pleated member. The distance between the elements **1** and **2** being the width of the drainage gap **3** is preferably in the range of 2-10mm, particularly 3-6mm and that space, i.e. the space of the drainage gap **3** is used to free falling i.e. dripping down of large droplets of the dispersed phase that are formed of small dispersed droplets in the filtration-coalescing element **1** in the manner described above.

According one of preferred embodiments of the invention the filtration layer 1a of the filtration-coalescing element **1** comprises fibres having superphobic surface properties, for example superhydrophobicity in the case when the liquid of said dispersed phase is a water. High phobicity of surfaces of the fibres, that is super-phobicity defined by contact angles exceeding 120°, i.e. larger or equal to 120° preferably greater than 150° of fibres contained in the fibrous structure of the filtration layer **1a,** of the filtration-coalescing element **1** ensure free filtered medium flow and particularly free flow of said continuous phase through the filtration layer **1a,** whereas fine droplets of the dispersed phase dispersed in said continuous phase during the flow inside fibrous structure of the filtration layer 1a bounce off from the fibres and are joined to form large droplets only in the following coalescing layer **1b** and the dripping layer **1c** of the filtration-coalescing element **1.** Large droplets leaving the filtration-coalescing element **1** effectively detach from dripping layer **1c** in a form of large uniformly sized droplets and sediment in a space of the drainage gap **3,** where from they are directed by gravity to the accumulation tank **4** disposed below the separation system.

The above indicated aims of the invention are achieved by providing a solution in which a multi-stage separation system is used, comprising an outer multi-layered non-woven structure forming the filtration-coalescing element **1,** which element comprises in its individual layers **1a,1b** and **1c** fibres having appropriate affinity of their surface properties with respect to the particles of the solid phase and to droplets of the liquid of the dispersed phase, as well as the liquid of the continuous phase and also forming the separation element 2, separating droplets of the dispersed phase from the fluid to be purified, between which elements **1** and **2** there is a space **3** allowing droplets to fall, wherein a schematic diagram of such system is shown in Fig. 1 and Fig. 2. In the ideal situation, following the filtration-coalescing element **1** a perfectly purified liquid of the continuous phase, which is free of particles of the solid phase and tiny, fine droplets of the dispersed phase, as well as rapidly sedimenting large droplets separated from a dripping layer **1c** flows towards the separating element 2.

In the real situation the hydrophobic separation element **2** provides protection at the outlet of the purified liquid of the continuous phase, stopping a few tiny, fine droplets of the dispersed phase that could get out through the coalescing layer and the dripping layer in its initial form. The filtration-coalescing element **1** of the invention design, which is the melt-blown depth structure, provides a much better protection of the separation element **2** against deposition of solid particles on its surface - since their penetration especially through the structures of layers **1a** and **1b** is reduced to a level lower than in the currently offered filtration systems. Thanks to that the hydrophobic properties of the surface of the separation element **2** are not exposed to uncontrolled changes caused by deposition thereon of solid particles. In addition, the hydrodynamic conditions in the drainage gap **3** ensured by an appropriately designed swirling guiding vanes **6** minimize phenomenon of deposition of liquid droplets and solid particles on the surface of the separation element **2** and support self-cleaning of said element 2.

### Exemplary embodiment of the invention:

In an example illustrating an idea of the separation system according to the invention, that is the two-phase separator which is the aim of the invention, there were performed measurements of the water removal efficiency, which water forms the dispersed phase and the efficiency of removing of solid particles of Fe₃O₄, constituting the solid phase, from a diesel fuel forming the continuous phase (medium to be purified) according to the invention. In the raw material to be filtered that is the filtered medium the continuous phase was a commercially available low sulphur diesel oil, in which water droplets were dispersed and suspended at a concentration of 1500 mg/l (the free water) having sizes in the range 0,4-32 µm and particles of the Fe₃O₄ haematite of a size in the range 50-500nm and the mass concentration of 20 mg/l.
The separation system was constructed in accordance with the embodiment shown in Fig. 1, wherein the filtration-coalescing element **1** was a layered polyester non-woven fabric. The first layer (seen in the direction of the flow of the slurry to be filtered), that is the filtration layer **1a** having a thickness of 15 mm was composed of polyester fibres having a diameter between 300-600nm and an average porosity of 92%, on the surface of which layer **1a** grains of colloidal silica having the particles diameter of 5nm were immobilized. The coalescing layer **1b** constituted by a structure which was made of polymeric fibres (such as polypropylene or polyester) having sizes in the range of 0.5-20 µm, while the dripping layer **1c** constituted the structure made of polymeric fibres (such as polypropylene or polyester) having sizes in the range of 70-120 µm. The coalescing structure **1b,c** respectively had the following thickness: thickness of the coalescing layer **1b** - 4 mm, thickness of the transition region **TR** in which the fluent continuous change of the porosity and sizes of the fibres occurs - 2 mm, and the thickness of the dripping layer **1c** - 5 mm.

The separating element **2** arranged at a distance of 4-8mm from the filtration-coalescing element **1** that is the distance calculated between the outlet surface i.e. the surface facing the separating element 2 of the dripping layer **1c** and the surface of the imaginable cylinder surface defined by the outer ridges **8** of the pleats of the separating element **2.** Said separating element **2** was of the cellulosic material having a developed surface in the form of pleated surface, on which surface the commercially available suspension EC-1206 offered by the company NanoX GmbH was applied for hydrophobization. Development of the surface of the separating element 2 was achieved by shaping the element 2 in the pleated form with pleats of the height of 10mm and the number of pleats - 40. The linear flow rate of the filtered suspension at the inlet to the filtration-coalescing element **1** was 2.5 mm/s, and the superficial velocity through the porous structure of the separating element **2** (or the inflow velocity on the surface) was 0.15 mm/s.

On the basis of measurements of concentrations of separated haematite particles and water droplets it was determined the mass effectiveness of separation of the filtration-coalescing element **1** for haematite particles as equal to 99.95%, and the separation efficiency of insoluble water (i.e. droplets) on the basis of the measurements of its concentration downstream the separating element **2** in the purified diesel oil equal to 99.3%. Both the above efficiency were related to a given concentration of a haematite and water in the inlet stream of the initial diesel oil to be purified to the separation system according to the invention having the above-described structure.

In the above presented description and embodiments the case is presented in which in the filtration-coalescing element **1** between the coalescing layer **1b** and the dripping layer **1c** in the region of their interface, there is a transition region **TR** in which the smooth and continuous change of the porosity from the boundary value of the porosity for the coalescing layer **1b** (i.e. the local porosity value on the border of the coalescing layer) to the boundary value of the porosity for the dripping layer **1c** (i.e. the local porosity value on the border of the dripping layer **1c**) is carried out (i.e. on the common border of the coalescing layer and the dripping layer). However, it is also possible to make the filtration-coalescing element **1** without such transition region between those two layers **1b** and **1c,** and the change of the porosity can be smoothly carried out in the above mentioned ranges of porosity throughout and across entire coalescing-dripping structure **1 b, c.**

## Claims

1. Separation system for simultaneous removal of a solid phase particles and a dispersed phase droplets from a medium to be purified by filtration, that is a filtered medium in a form of a suspension or emulsion, that is a liquid continuous phase comprising particles of said solid phase and a liquid dispersed phase which liquid is dispersed in the form of droplets suspended in an immiscible with them liquid continuous phase, which said continuous phase constitutes of said medium to be filtered, wherein the separation system has a form of a multilayer fibrous structure of a self-supported design construction or a construction supported on one or more perforated supporting elements (EN1, EN2), preferably cylindrical, and it is provided with an inlet and an outlet of said medium to be filtered, wherein said separation system comprises, arranged successively in a flow direction of said medium to be filtered from said inlet to said outlet, following elements in the form of successive layers:
- a filtration-coalescing element (1) in a form of a fibrous structure,
- a separating element (2), which is a barrier layer for droplets of said dispersed phase, said element is formed of fibres with phobic properties relative to droplets of said dispersed phase, and
- a drainage gap (3), disposed there between and separating said elements (1) and (2) from each other, which gap (3) being a free space for dripping of droplets of said dispersed phase under influence of gravity and being in fluid communication with the accumulation space (4) in which dripped droplets of said dispersed phase are collected, which accumulation space (4) is located immediately below the separation system or above the system and it is provided with a valve (5), wherein the filtration-coalescing element (1) is a non-woven fibrous structure composed of at least two layers including at least a filtration structure, the separation system is **characterized in that**:
the filtration-coalescing element (1) is in the form of a depth non-woven structure composed of fibres packed in a form of a cartridge and it comprises, viewing in a flow direction from said inlet of inflowing medium to be filtered towards said outlet and arranged in sequence one following another:
- a filtration layer (1a) being an initial depth filtration layer comprising polymer fibres of nanometric sizes, wherein said fibres composing the layer (1a) have extensively phobic surface properties, and preferably superphobic properties of their surface relative to droplets of said dispersed phase, defined by contact angles equal to or greater than 120°, and further the filtration layer (1a) is a structure having across its thickness a porosity gradient, namely: its porosity decreases from the inlet side to the outlet side across said layer in said direction of a flow of said medium to be filtered, which porosity is within limits of an average porosity ranging from 90 to 95%;
- a coalescing layer (1b) composed of polymer fibres, and adjacently following it is arranged,
- a dripping layer (1c) composed of polymer fibres, wherein both latter layers, which jointly form a coalescing structure (1b, c) are packaged in the form of a depth gradient structure of fibres, and wherein a porosity gradient across the entire coalescing structure (1b, c) changes in the opposed direction with respect to said porosity gradient in said filtration layer (la), namely the porosity increases in said flow direction of said medium to be filtered stream, and wherein polymer fibres from which the above listed layers (1b) and (1c) are composed demonstrate variable surface properties defined by variable contact angles with respect to droplets of said dispersed phase along a path of said flow of said medium across said coalescing structure (1b,c) in said flow direction, in such a way that a porosity in said coalescing layer (1b) changes in gradient ranging from 75% to 95% along said flow direction, and said fibres in said coalescing layer (1b) exhibit poor philic surface properties and/or poor phobic properties relative to droplets of said dispersed phase which properties are defined by contact angles in the range from 45° to 95°, whereas said dripping layer (1c) has an average porosity in the range of 85-98%, and the contact angles defining surface properties of said fibres composing said dripping layer (1c) are in the range from 75° to 105°, whereas the separation system is further **characterized in that**, the filtration layer (1a) comprises fibres whose diameters are in the range 250-800nm and preferably in the range 400-600 nm, and having thickness in the range 5-20 mm, the coalescing layer (1b) of said filtration-coalescing element (1) comprises fibres of diameter sizes in the range 0.5-30µm, preferably 0.8-15 µm and a thickness in the range of 2-6mm, and the dripping layer (1c) of the filtration-coalescing element (1) comprises fibres of diameter sizes in the range of 40-120µm, preferably 60-90µm and a thickness in the range of 4-8mm.

2. The separation system according to claim 1, **characterized in that** between said fibrous structure of the coalescing layer (1b) and said fibrous structure of the dripping layer (1c) during fibres manufacturing process, a transition region of a fibrous structure is formed, in which region a continuous, smooth change of a porosity between boundary values occurs, respectively from said porosity on a border of the coalescing layer (1b) to said porosity on a border of the dripping layer (1c), wherein a thickness of said transition region is in the range 1-3 mm.

3. The separation system according to any one of claims 1 to 2, **characterized in that** the filtration layer (1a), that is the first one viewing from the inflow side of said medium to be filtered to the system, has a thickness which is 20-70% of the thickness of the whole depth structure of the filtration-coalescing element (1) and wherein fibres of which said filtration layer (1a) is composed are covered with a substance having phobic properties with respect to the dispersed phase forming droplets suspended in said continuous phase and/or on said fibres of said filtration layer (1a) a roughness is formed.

4. The separation system according to any one of claims 1 to 3, **characterized in that** the coalescing layer (1b) and the dripping layer (1c) jointly have a thickness which is 30-80% of the thickness of the whole depth structure of the filtration-coalescing element (1).

5. The separation system according to any one of claims 1 to 4, **characterized in that** the separating element (2) is made of a porous material having a pore size preferably in the range 0.5-50 µm, a surface of which is coated with a material of phobic properties with respect to the dispersed phase forming droplets suspended in said continuous phase and it has a thickness preferably in the range 0.5-2 mm.

6. The separation system according to any one of claims 1 to 5, **characterized in that** a geometric surface of the filtration-coalescing element (1) on its inlet side, that is, on the side of an inflow of said medium to be filtered is preferably 5-50 times smaller than a geometric surface of the separating element (2) at its inlet side, that is at the side facing towards the drainage gap (3), wherein the sizes of those geometric surfaces are selected so that at a given volumetric flow rate of said medium to be filtered through the separation system, the linear velocity at said inflow side of the filtration-coalescing element (1) is preferably in the range 1-20 mm/s.

7. The separation system according to any one of claims 1 to 6, **characterized in that** both the filtration-coalescing element (1) and the separating element (2) are in a form of hollow cylinders, the walls of which form filtration structures and said cylinders are arranged coaxially with respect to each other, one inside the other, and are separated by the drainage gap (3) forming an annular space between them, that drainage gap (3) is in direct fluid communication with said accumulation zone (4) for collecting large droplets flowing out from the filtration-coalescing element (1) and being removed from the system upstream to the separating element (2), wherein the separation element (2) is formed as a pleated element.

8. The separation system according to claim 1 or according to any one preceding claims, **characterized in that** in said annular space constituting said drainage gap (3) a number of swirling guiding vanes (6) are further arranged, which guiding vanes (6) are spaced apart one from each other along a circumferential surface of the filtration-coalescing element (1) facing towards the drainage gap (3), that is an outlet side surface of the dripping layer (1c), on which guiding vanes (6) are spaced, wherein said guiding vanes (6) are positioned and oriented on said side of outflow of droplets of said dispersed phase from said dripping layer (1c) at an angle (α), preferably set in a range of 15-45° relative to a tangent to a cylindrical surface defined by said surface of the dripping layer (1c) facing towards the drainage gap (3).

9. The separation system according to claim 8, **characterized in that** it comprises a supporting element (EN1), forming an inner core of the filtration-coalescing element (1), which is preferably a separate constructional element to which the swirling guiding vanes (6) are mounted.

10. The separation system according to claim 8, **characterized in that** the filtration-coalescing element (1) has a self-supporting construction which does not require any additional support and wherein no separate supporting element forming an inner core of said filtration - coalescing element (1) is provided, while said swirling guiding vanes (6) are mounted to their own supporting structure and form with this supporting structure a separate constructional element, configured to be inserted in the drainage gap (3) and to form an additional constructional support of the filtration-coalescing element (1).

11. The separation system according to claim 8, **characterized in that** said swirling guiding vanes (6) have a length preferably in the range 10-45mm and a number of said swirling guiding vanes (6) disposed in the annular space in the drainage gap (3) is preferably in the range of 8-32.

## Patentansprüche

1. Trennsystem zur gleichzeitigen Entfernung von Partikeln der festen Phase und Tropfen der dispergierten Phase aus einem durch Filtration zu reinigenden Medium, welches Medium in Form einer Suspension oder Emulsion ausgebildet ist, die eine kontinuierliche flüssige, die Partikel der festen Phase und die flüssige dispergierte Phase enthaltende Phase darstellt, bei der die Flüssigkeit in Form von in einer mit ihnen nicht mischbaren, eine kontinuierliche Phase darzustellenden Flüssigkeit suspendierten Tropfen dispergiert ist, welche Flüssigkeit die kontinuierliche Phase das zu filtrierende Medium darstellt, wobei das Trennsystem in Form einer mehrschichtigen Faserstruktur mit selbsttragender Konstruktion oder einer auf einem oder mehreren perforierten, vorzugsweise zylindrischen Stützelementen (EN1, EN2) gestützten Struktur ausgebildet ist und mit einem Einlass und einem Auslass für das zu filtrierende Medium versehen ist, welches Trennsystem folgende, nacheinander in der Strömungsrichtung des zu filternden Mediums von dem Einlass zu dem Auslass angeordnete Elemente in der Form von aufeinanderfolgenden Schichten umfasst:
- ein Koaleszenz-Filter-Element (1) in Form einer Faserstruktur,
- ein eine Sperrschicht für Tropfen der dispergierten Phase bildendes Trennelement (2), welches Trennelement aus Fasern mit die Tropfen der dispergierten Phase abweisenden Eigenschaften gebildet ist, und
- einen dazwischen angeordneten und die genannten Elemente (1) und (2) voneinander trennenden Drainagespalt (3), welcher Drainagespalt (3) einen freien Raum für das schwerkraftbedingte Absenken von Tropfen der dispergierten Phase bereitstellt und in Fluidverbindung mit einem Sammelraum (4) ist, in dem sich die ablaufenden Tropfen der dispergierten Phase gesammelt werden, wobei der Sammelraum (4) unmittelbar unterhalb des Trennsystems oder oberhalb dieses Systems angeordnet und mit einem Ventil (5) versehen ist, wobei das Koaleszenz-Filter-Element (1) eine Vliesstoffstruktur ist, die aus mindestens zwei mindestens eine Filterstruktur umfassende Schichten besteht,
**dadurch gekennzeichnet, dass**
das Koaleszenz-Filter-Element (1) in Form einer Vliesstofftiefenstruktur gebildet ist, die aus in Form einer Einlage gepackten Fasern besteht und folgende, nacheinander in der Strömungsrichtung des zu filternden Mediums von dem Einlass zu dem Auslass angeordnete Elemente aufweist:
- eine Filtrationsschicht (la), die eine Tiefvorfiltrationsschicht darstellt und Polymerfasern von nanometrischer Größe umfasst, wobei die diese Schicht (1a) bildenden Fasern die Tropfen der dispergierten Phase stark abweisende Oberflächeneigenschaften, und vorzugsweise superabweisende Oberflächeneigenschaften aufweisen, indem ihre Kontaktwinkel gleich oder größer als 120° sind, und ferner die Filtrationsschicht (1a) eine Struktur ist, in der ein Porositätsgradient auftritt, indem ihre Porosität von der Einlassseite zur Auslassseite über die Schicht hindurch in der Strömungsrichtung des zu filternden Mediums abnimmt und ihre mittlere Porosität im Bereich von 90 bis 95% liegt;
- eine aus Polymerfasem gebildete Koaleszenzschicht (1b) sowie eine daran anschließende, unmittelbar danach folgende
- eine aus Polymerfasern gebildete Rieselschicht (1c), wobei die beiden, gemeinsam eine Koaleszenzstruktur (1a, c) bildenden Schichten (1b) und (1c), in Form einer Gradienten-Tiefenfaserstruktur gepackt sind, wobei sich der Porositätsgradient über die gesamte Koaleszenzstruktur (1b, c) hindurch in der entgegengesetzten Richtung als der Porositätsgradient in der Filtrationsschicht (1a) ändert, indem die Porosität in der Strömungsrichtung des zu filternden Mediums zunimmt, und die die genannten Schichten (1b) und (1c) bildenden Fasern sich ändernde Oberflächeneigenschaften aufweisen, die durch die sich ändernden Kontaktwinkel gegenüber den Tropfen der dispergierten Phase entlang des Strömungswegs des Mediums in der Strömungsrichtung durch die genannte Koaleszenzstruktur (1b, c) derart bestimmt sind, dass die Porosität in der Koaleszenzschicht (1b) sich gradientenmäßig im Bereich von 75% bis 95% in der Strömungsrichtung ändert, und die Fasern der Koaleszenzschicht (1b) die Tropfen der dispergierten Phase schwach anziehende und/oder schwach abweisende Eigenschaften aufweisen, welche Eigenschaften durch die Kontaktwinkel im Bereich von 45° bis 95° bestimmt sind, während die Rieselschicht (1c) eine mittlere Porosität im Bereich von 85 bis 98% aufweist, und die Kontaktwinkel, durch die die Oberflächeneigenschaften der die Rieselschicht (1c) bildenden Fasern bestimmt sind, im Bereich von 75 bis 105° liegen, wobei das Trennsystem ferner **dadurch gekennzeichnet ist, dass** die Filterschicht (1a) Fasern umfasst, deren Durchmesser im Bereich von 250-800 nm, und vorzugsweise im Bereich von 400-600 nm liegt und deren Dicke im Bereich vom 5-20 nm liegt, die Koaleszenzschicht (1b) des Koaleszenz-Filter-Elements (1) Fasern mit Durchmesser im Bereich von 0,5-30 µm, und vorzugsweise 0,8-15 µm und einer Dicke im Bereich von 2-6 nm umfasst, während die Rieselschicht (1c) des Koaleszenz-Filter-Elements (1) Fasern mit Durchmesser im Bereich von 40-120 µm, und vorzugsweise von 60-90 µm und einer Dicke im Bereich von 4-8 nm, umfasst.

2. Trennsystem nach Anspruch 1, **dadurch gekennzeichnet, dass** zwischen der Faserstruktur der Koaleszenzschicht (1b) und der Faserstruktur der Rieselschicht (1c) beim Faserherstellungsverfahren ein Faserstrukturbergangsbereich gebildet wird, in welchem Übergangsbereich eine kontinuierliche, stufenlose Porositätsänderung zwischen den Grenzwerten, entsprechend von der Porosität an der Grenze der Koaleszenzschicht (1b) zu der Porosität an der Grenze der Rieselschicht (1c), auftritt, wobei die Dicke dieses Übergangsbereichs im Bereich von 1-3 mm liegt.

3. Trennsystem nach einem der Ansprüche 1 bis 2, **dadurch gekennzeichnet, dass** die Filtrationsschicht (la), d.h. die erste Schicht von der Einströmungsseite des zu filtrierenden Mediums ins System gesehen, eine Dicke aufweist, die 20-70% der Dicke der gesamten Tiefenstruktur des Koaleszenz-Filter-Elements (1) einnimt, und wobei die die Filtrationsschicht (1a) bildenden Fasern mit einem Stoff beschichtet sind, die die in der kontinuierlichen Phase suspendierte Tropfen der dispergierten Phase abweisenden Eigenschaften aufweist und/oder auf den Fasern dieser Filtrationsschicht (1a) eine Rauheit erzeugt wird.

4. Trennsystem nach einem der Ansprüche 1 bis 3, **dadurch gekennzeichnet, dass** die Dicke det Koaleszenzschicht (1b) und der Rieselschicht (1c) insgesamt 30-80% der Dicke der gesamten Tiefenstruktur des Koaleszenz-Filter-Elements (1) beträgt.

5. Trennsystem nach einem der Ansprüche 1 bis 4, **dadurch gekennzeichnet, dass** das Trennelement (2) aus einem porösen Material mit einer Porengröße vorzugsweise im Bereich von 0,5-50 µm besteht, dessen Oberfläche mit einem Material mit den die dispergierte in der kontinuierlichen Phase suspendierte Tropfen bildende Phase abweisenden Eigenschaften beschichtet ist, und eine Dicke aufweist, die vorzugsweise im Bereich von 0,5-2 mm liegt.

6. Trennsystem nach einem der Ansprüche 1 bis 5, **dadurch gekennzeichnet, dass** die geometrische Fläche des Koaleszenz-Filter-Elements (1) an der Einlassseite, d.h. an der dem einströmenden zu filtrierenden Mediums zugewandten Seite, vorzugsweise 5-50 mal kleiner als die geometrische Fläche des Trennelementes (2) an seiner Einlaufseite ist, d.h. an der dem Drainagespalt (3) zugewandten Seite, wobei die Größen dieser geometrischen Flächen so gewählt sind, dass bei einer vorgegebenen Volumenströmung des zu filtrierenden Mediums durch das Trennsystem, die lineare Geschwindigkeit an der Einströmungsseite des Koaleszenz-Filter-Elements (1) vorzugsweise im Bereich von 1-20 mm/s liegt.

7. Trennsystem nach einem der Ansprüche 1 bis 6, **dadurch gekennzeichnet, dass** das Koaleszenz-Filter-Element (1) sowie das Trennelement (2) in Form von Hohlzylindern ausgebildet sind, deren Wände Filtrationsstrukturen bilden und welche Zylinder koaxial ineinander angeordnet und durch den einen Ringraum dazwischen bildenden Drainagespalt (3) getrennt sind, wobei der Drainagespalt in direkter Fluidverbindung mit dem Sammelraum (4) für große Tropfen steht, die aus dem Koaleszenz-Filter-Element (1) ausströmen und stromaufwärts des Trennelements (2) aus dem Trennystem entfernt werden, wobei das Trennelement (2) als Plissekörper ausgebildet ist.

8. Trennsystem nach Anspruch 1 oder nach einem der vorhergehenden Ansprüche, **dadurch gekennzeichnet, dass** in dem den Drainagespalt (3) bildenden Ringraum ferner mehrere Drallschaufeln (6) angeordnet sind, die voneinander beabstandet auf der dem Drainagespalt (3) zugewandten Innenumfangsfläche des Koaleszenz-Filter-Elements (1) angeordnet sind, welche eine auslassseitige Fläche der Rieselschicht (1c) ist, auf der die Drallschaufeln (6) angeordnet sind, wobei die Drallschaufeln (6), ausgehend von der Seite, an der die Tropfen der dispergierten Phase aus dieser Rieselschicht (1c) ausströmen, unter einem Winkel (a) positioniert und ausgerichtet sind, der vorzugsweise im Bereich von 15-45° gegenüber der Tangente der Zylinderfläche, die durch die Oberfläche der Rieselschicht (1c) auf ihrer dem Drainagespalt (3) zugewandten Auslassseite bestimmt ist, liegt.

9. Trennsystem nach Anspruch 8, **dadurch gekennzeichnet, dass** es ein Stützelement (EN1) umfasst, das einen Innenkern des Koaleszenz-Filter-Elements (1) bildet, der vorzugsweise ein separates Konstruktionselement ist, an dem die Drallschaufeln (6) befestigt sind.

10. Trennsystem nach Anspruch 8, **dadurch gekennzeichnet, dass** es kein separates den Innenkern des Koaleszenz-Filter-Elements (1) bildendes Tragelement umfasst und die Struktur des Koaleszenz-Filter-Elements (1) selbsttragend ist und keine Abstützung erfordert, während die Drallschaufeln (6) auf ihrem eigenen Stützwerk angebracht sind und mit diesem Stützwerk eine separate Konstruktionseinheit bilden, die zur Aufnahme in den Drainagespalt (3) vorgesehen ist und ein zusätzliches Stützelement des Koaleszenz-Filter-Elements (1) darstellt.

11. Trennsystem nach Anspruch 8, **dadurch gekennzeichnet, dass** die Drallschaufeln (6) eine Schaufellänge vorzugsweise im Bereich von 10-45 mm aufweisen, und die Anzahl der Drallschaufeln (6), die in dem Ringraum in dem Drainagespalt (3) angeordnet sind, vorzugsweise im Bereich von 8-32 liegt.

## Revendications

1. Système de séparation pour l'élimination simultanée des particules d'une phase solide et des gouttes d'une phase dispersée du fluide destiné à être purifié par voie de filtration, lequel fluide filtré présente la forme de suspension ou d'émulsion qui constitue une phase liquide continue comprenant des particules de la phase solide ainsi que de la phase dispersée liquide, dans laquelle le liquide est dispersé sous forme des gouttes suspendues dans un liquide immiscible avec celles-ci, constituant la phase continue, laquelle phase continue constitue le fluide destiné à la filtration, le système de séparation présentant la forme d'une structure fibreuse multicouche de construction autoportante ou bien d'une structure portée par un ou plus élément porteur perforé (EN1, EN2), préférentiellement cylindrique, et est pourvu d'une entrée de fluide filtré ainsi que d'une sortie, lequel système de séparation comporte, disposés successivement en direction de l'écoulement du fluide filtré depuis l'entrée jusqu'à la sortie, les éléments suivants sous forme de couches successives:
- un élément de filtration-coalescence (1), sous forme de structure fibreuse,
- un élément de séparation (2), constituant une couche barrière pour les gouttes de la phase dispersée, lequel élément est créé de fibres ayant des propriétés phobiques par rapport aux gouttes de la phase dispersée, et
- un interstice de drainage (3) positionné entre eux, séparant lesdits éléments (1) et (2) mutuellement entre eux, lequel interstice de drainage (3) constitue un libre espace pour la chute gravitationnelle des gouttes de la phase dispersée, étant en communication fluidique avec l'espace d'accumulation (4), dans lequel les gouttes ruisselantes de la phase dispersée sont collectées, lequel espace d'accumulation (4) est positionné directement en-dessous du système de séparation ou en-dessus de ce système et pourvu d'une valve (5), l'élément de filtration-coalescence (1) étant constitué d'une structure non-tissée composée d'au moins deux couches comportant au moins la structure filtrante, le système de séparation étant
**caractérisé en ce que**
l'élément de filtration-coalescence (1) est exécuté en forme d'une structure non-tissée de filtration en profondeur construite à partir de fibres compactées sous forme de cartouche et comporte, positionnées respectivement en direction d'écoulement du fluide, à partir du côté de l'entrée du fluide filtré affluant jusqu'à la sortie:
- une couche filtrante (1a), constituant la couche de préfiltration en profondeur, contenant des fibres de polymèriques de taille nanométrique, les fibres formant cette couche (1a) présentant des fortes propriétés surfaciques phobiques, et préférentiellement des propriétés superphobiques, de la surface par rapport aux gouttes de la phase dispersée, **caractérisées par** des angles de raccordement égales ou supérieurs à 120°, et en outre la couche filtrante (1a) est une structure, dans laquelle existe un gradient de porosité, notamment sa porosité diminue depuis le côté de l'entrée jusqu'au côté de la sortie au travers de la couche dans la direction d'écoulement du fluide filtré et se situe dans les limites d'une porosité moyenne de 90-95%;
- une couche de coalescence (1b) construite de fibres polymèriques ainsi que adjacente, directement lui succédant
- une couche d'égouttage (1c) construite de fibres polymèriques, les deux couches (1b) et (1c) qui constituent ensemble la structure de coalescence (1b, c) étant compactées sous forme d'une structure de gradient de filtration en profondeur en fibres, le gradient de porosité au travers toute la structure de coalescence (1b, c) changeant dans la direction opposée au gradient de porosité dans la couche filtrante (la), c'est à dire que la porosité augmente dans la direction d'écoulement du flux de fluide filtré, et les fibres formant lesdites couches (1b) et (1c) présentent des propriétés surfaciques changeantes, **caractérisés par** des angles de raccordement variables par rapport aux gouttes de la phase dispersée le long du trajet d'écoulement du fluide dans la direction d'écoulement au travers de ladite structure de coalescence (1b, c), de sorte que dans la couche de coalescence (1b) la porosité change par paliers dans le domaine de 75% à 95% selon la direction d'écoulement, et les fibres de la couche de coalescence (1b) présentent des faibles caractéristiques philiques et/ou des faibles caractéristiques phobiques par rapport aux gouttes de la phase dispersée, définies par les angles de raccordement dans le domaine de 45° à 95°, et la couche d'égouttage (1c) présente une porosité moyenne dans le domaine de 85-98%, et les angles de raccordement des fibres dans cette couche, définissant les propriétés surfaciques des fibres formant cette couche d'égouttage (1c) se situent dans le domaine de 75° à 105°, en outre le système de séparation étant **caractérisé en ce que** la couche filtrante (1a) comporte des fibres dont les diamètres se situent dans les limites de 250-800 nm, et avantageusement dans les limites de 400-600 nm et les épaisseurs dans le domaine de 5-20 mm, la couche de coalescence (1b) de l'élément de filtration-coalescence (1) comporte des fibres de diamètre de grandeurs dans le domaine de 0,5-30 µm, et avantageusement de 0,8-15 µm et d'épaisseur dans le domaine de 2-6 mm, et la couche d'égouttage (le) de l'élément de filtration-coalescence (1) comporte des fibres de diamètre de grandeurs dans le domaine de 40-120 µm, avantageusement de 60-90 µm ainsi d'épaisseur dans le domaine de 4-8 mm.

2. Système de séparation selon la revendication 1, **caractérisé en ce que** entre la structure fibreuse de la couche de coalescence (1b) et la structure fibreuse de la couche d'égouttage (1c) est crée, durant le procédé de fabrication des fibres, une zone de transition de la structure fibreuse, dans laquelle zone existe un changement continu, harmonieux de porosité entre les valeurs limite, respectivement, depuis la porosité à la limite de la couche de coalescence (1b) jusqu'à la porosité à la limite de la couche d'égouttage (1c), l'épaisseur de cette zone de transition étant comprise dans les limites de 1-3 mm.

3. Système de séparation selon une des revendications 1 à 2, **caractérisé en ce que** la couche filtrante (1a), la première à partir du côté de l'arrivée du fluide filtré dans le système, présente une épaisseur constituant 20-70% de l'épaisseur de l'entière structure de filtration en profondeur de l'élément de filtration-coalescence (1), et les fibres formant la couche filtrante (1a) sont couvertes d'une matière ayant des propriétés phobiques par rapport à la phase dispersée formant des gouttes, suspendues dans la phase continue et/ou sur les fibres de cette couche filtrante (1a) est formée une rugosité.

4. Système de séparation selon une des revendications 1 à 3, **caractérisé en ce que** la couche de coalescence (1b) et la couche d'égouttage (1c), ensemble, ont une épaisseur constituant 30-80% de l'épaisseur de l'entière structure de filtration en profondeur de l'élément de filtration-coalescence (1).

5. Système de séparation selon une des revendications 1 à 4, **caractérisé en ce que** l'élément de séparation (2) est réalisé en matériau poreux présentant un diamètre des pores avantageusement compris dans le domaine 0,5-50 µm, dont la surface est recouverte d'une matière ayant des propriétés phobiques par rapport à la phase dispersée formant les gouttes suspendues dans la phase continue et pressente une épaisseur avantageusement comprise dans le domaine 0,5-2 mm.

6. Système de séparation selon une des revendications 1 à 5, **caractérisé en ce que** la surface géométrique de l'élément de filtration-coalescence (1) du côté de l'entrée, c'est à dire du côté du fluide filtré affluant, avantageusement est 5-50 fois plus petite que la surface géométrique de l'élément de séparation (2) du côté de l'entrée, c'est à dire du côté dirigé vers l'interstice de drainage (3), les grandeurs de ces surfaces géométriques étant choisies de telle manière, afin que pour un débit volumétrique donné du fluide filtré au travers le système de séparation, la vitesse linéaire du côté de l'affluence sur l'élément de filtration-coalescence (1) avantageusement soit dans le domaine de 1-20 mm/s.

7. Système de séparation selon une des revendications 1 à 6, **caractérisé en ce que** l'élément de filtration-coalescence (1) ainsi que l'élément de séparation (2) ont une forme de cylindres creux, dont les parois forment des structures filtrantes et lesquels cylindres sont disposés de façon coaxiale l'un par rapport à l'autre, l'un dans l'autre, et séparés par l'interstice de drainage (3) formant entre ceux-ci un espace annulaire, lequel interstice de drainage communique fluidiquement directement avec la zone d'accumulation (4) de grandes gouttes s'écoulant de l'élément de filtration-coalescence (1) et évacuées du système avant l'élément de séparation (2), l'élément de séparation étant conformé sous forme d'élément plissé.

8. Système de séparation selon la revendication 1 ou selon une des revendications précédentes, **caractérisé en ce que** dans l'espace annulaire constituant l'interstice de drainage (3) est disposé en outre un certain nombre de pales de tourbillonnement (6) qui sont disposées à distance entre elles sur le périmètre de la surface intérieure de l'élément de filtration-coalescence (1), c'est à dire dirigée vers l'interstice de drainage (3) qui est la surface de sortie de la couche d'égouttage (le), sur laquelle sont positionnées les pales de tourbillonnement (6), lesquelles pales de tourbillonnement (6) sont disposées et dirigées du côté de la sortie des gouttes de la phase dispersée de cette couche (1c) sous un angle (α) avantageusement compris entre les limites 15-45° par rapport à la tangente à la surface cylindrique, définie par la surface de la couche d'égouttage (1c) de son côté de sortie du côté de l'interstice de drainage (3).

9. Système de séparation selon la revendication 8, **caractérisé en ce que** il comporte un élément porteur (EN1), formant le noyau interne de l'élément de filtration-coalescence (1), avantageusement étant un élément structurel distinct auquel sont fixées les pales de tourbillonnement (6).

10. Système de séparation selon la revendication 8, **caractérisé en ce que** il ne comporte pas un élément porteur distinct formant le noyau interne de l'élément de filtration-coalescence (1), et la structure de l'élément de filtration-coalescence (1) est autoportante, n'exigeant pas de support, par contre les pales de tourbillonnement (6) sont encastrées sur leur propre portique avec laquelle elles forment un élément structurel distinct, destiné a placer dans l'interstice de drainage (3) et constituent un support structurel additionnel de l'élément de filtration-coalescence (1).

11. Système de séparation selon la revendication 8, **caractérisé en ce que** les pales de tourbillonnement (6) présentent une longueur avantageusement dans le domaine de 10-45 mm, et le nombre des pales de tourbillonnement (6) disposées dans l'espace annulaire dans l'interstice (3) avantageusement est dans le domaine de 8-32.
